# EUROPEAN PATENT APPLICATION

(11) **EP 1 621 372 A1**
(43) Date of publication of application: **01.02.2006**
(21) Application number: 05005130.9
(22) Date of filing: 09.03.2005
(51) Int. Cl.: B60G 17/027, F16F 9/54

(54) **Hydraulic shock absorber of motor cycle or the like**

(30) Priority: 28.07.2004 JP 2004220752
(71) Applicant: SHOWA CORPORATION, Gyoda-shi, Saitama (JP)
(72) Inventor: Nakano, Koichi Showa Corporation, Iwata-gun Shizuoka (JP); Sugata, Norihisa Showa Corporation, Iwata-gun Shizuoka (JP)
(74) Representative: Grünecker, Kinkeldey, Stockmair & Schwanhäusser Anwaltssozietät

(57) **Abstract**

In a hydraulic shock absorber (10) of a motor cycle or the like in which a piston rod (12) is inserted to a damper cylinder (11), a suspension spring (13) is provided between the damper cylinder (11) and the piston rod (12), a spring load adjusting apparatus (60) constituted by a hydraulic jack (61) adjusting a spring load of the suspension spring (13), and a hydraulic pump (70) supplying and discharging a working fluid to and from the hydraulic jack (61) is provided, an upper attaching member (16) provided in one of the damper cylinder (11) and the piston rod (12) is connected to a vehicle frame, and a lower attaching member (17) provide in the respective other of the damper cylinder (11) and the piston rod (12) is connected to a swing arm (19), a holding portion (80) holding the hydraulic pump (70) is provided in a lower portion than a connection portion (18) with respect to the swing arm (19) in the lower attaching member (17).

## Description

The present invention relates to a hydraulic shock absorber of a motor cycle or the like.

As a conventional hydraulic shock absorber of a motor cycle, there is a structure in which a piston rod is inserted to a damper cylinder, a suspension spring is provided between the damper cylinder and the piston rod, an upper mounting member provided in one of the damper cylinder and the piston rod is connected to a vehicle body frame, and a lower mounting member provided in the other is connected to a swing arm. One end portion of a swing arm is pivoted to an engine fixed to the vehicle body frame, and the other end portion is pivoted to a lower fork bridge fixed to a tire wheel side tube of a front fork.

In the hydraulic shock absorber of the motor cycle mentioned above, there is needs of provision of a spring load adjusting apparatus constituted by a hydraulic jack adjusting a spring load of the suspension spring, and a hydraulic pump supplying and discharging a working fluid to and from the hydraulic jack. As the spring load adjusting apparatus, there are structures described in Japanese Utility Model Publication No. 7-12746 (patent document 1), and Japanese Utility Model Publication No. 2-35062 (patent document 2).

In the conventional motor cycle, a space between the vehicle body frame to which the hydraulic shock absorber is attached, and a swing arm is narrow, and it is hard to install the spring load adjusting apparatus described in the patent documents 1 and 2.

In other words, the spring load adjusting apparatus described in the patent document 1 is structured such that both of the hydraulic jack and the hydraulic pump are integrally provided in the damper cylinder, the hydraulic pump is provided in an outer periphery of the damper cylinder in a direction orthogonal to a center shaft of the damper cylinder, and a size in a diametrical direction of the damper cylinder is hulking. Accordingly, the hydraulic pump can not gain entry to the narrow space between the vehicle body frame and the swing arm, and even if it gains entry, a hand handling the hydraulic pump is hard to gain entry, whereby an operability is deteriorated.

Further, the spring load adjusting apparatus described in the patent document 2 is structured such that the hydraulic jack is integrally provided in the damper cylinder, and the hydraulic pump is connected to the hydraulic jack via a hose. In the remote control type spring load adjusting apparatus, there is a case that there is no room for attaching the hydraulic pump to the narrow space between the vehicle body frame and the swing arm, and it is not desired to attach the hydraulic pump for the reason of an outer appearance.

An object of the present invention is to improve an attaching property of a sprig load adjusting apparatus, in a hydraulic shock absorber of a motor cycle or the like which is attached between a vehicle body frame and a swing arm.

The present invention relates to a hydraulic shock absorber of a motor cycle or the like comprising: a piston rod inserted to a damper cylinder; a suspension spring provided between the damper cylinder and the piston rod; a spring load adjusting apparatus constituted by a hydraulic jack adjusting a spring load of the suspension spring, and a hydraulic pump supplying and discharging a working fluid to and from the hydraulic jack; an upper attaching member provided in one of the damper cylinder and the piston rod, the upper attaching member being connected to a vehicle frame; and a lower attaching member provide in the respective other of the damper cylinder and the piston rod; the lower attaching member being connected to a swing arm. A holding portion holding the hydraulic pump is provided in a lower portion than a connection portion with respect to the swing arm in the lower attaching member.

The present invention will be more fully understood from the detailed description given below and from the accompanying drawings which should not be taken to be a limitation on the invention, but are for explanation and understanding only.
The drawings:
FIG. 1 is a front elevational view showing a hydraulic shock absorber of a motor cycle or the like;
FIG. 2 is a side elevational view of FIG. 1;
FIG. 3 is a cross sectional view showing a lower mounting member and a holder;
FIG. 4 is a cross sectional view showing a hydraulic jack; and
FIG. 5 is a cross sectional view showing a hydraulic pump.

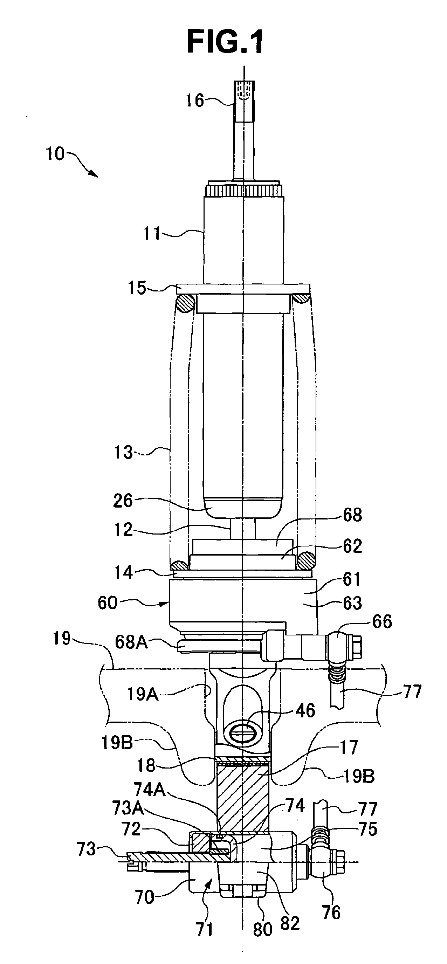

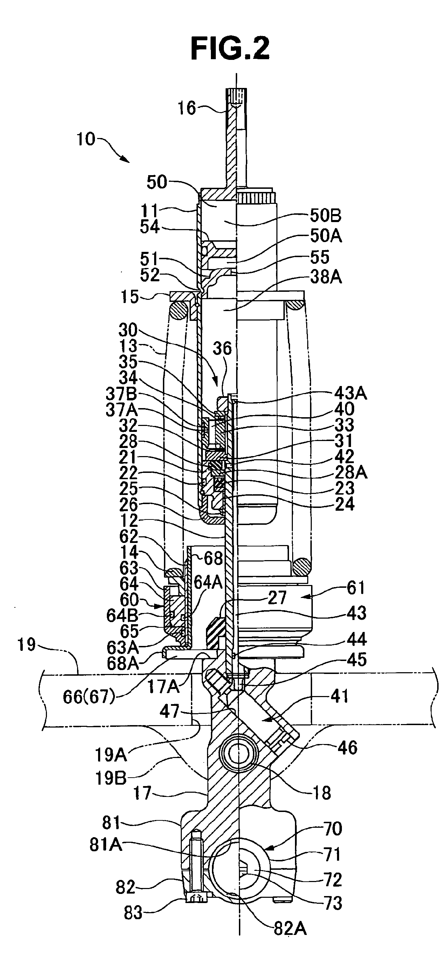

A hydraulic shock absorber 10 of a motor cycle 1 is structured, as shown in FIGS. 1 and 2, such that a hollow piston rod 12 is inserted to a damper cylinder 11, and a suspension spring 13 is interposed to an outer side portion of the damper cylinder 11 and the piston rod 12.

The hydraulic shock absorber 10 is structured such that a suspension spring 13 is interposed between a spring receiver 14 backed up by a spring load adjusting apparatus 60 provided in a side of the piston rod 12 as mentioned below, and a spring receiver 15 locked to an outer periphery of the damper cylinder 11, and an impact force applied to a vehicle from a road surface is absorbed by a spring force of the suspension spring 13.

The hydraulic shock absorber 10 is structured such that an upper attaching member 16 firmly fixed to an upper end portion of the damper cylinder 11 is connected to a vehicle frame (not shown) so as to freely oscillate, and a lower attaching member 17 fixed to a lower end portion of the piston rod 12 in accordance with a screwing is connected to a swing arm 19 by a bolt inserted to a damper bush 18 (a connection portion) so as to freely oscillate.

In this case, the motor cycle 1 is structure such that an engine is fixed to a lower portion of a vehicle body frame, an upper portion of the vehicle body frame is formed as a steering housing portion, a tension rod is provided between the vehicle body frame and the engine, and an upper fork bridge is supported to the steering housing portion via a ball joint. A swing arm 19 is pivoted around a pivot shaft provided in both sides of the engine, and a lower fork bridge is supported to a leading end portion of the swing arm 19 via a ball joint. A pair of right and left front forks are fixed to the upper fork bridge and the lower fork bridge, a vehicle body side tube of the front fork is fixed to the upper fork bridge, and a tire wheel side tube thereof is fixed to the lower fork bridge by an axle holder thereof. The hydraulic shock absorber 10 is provided between the vehicle body frame and the swing arm 19.

In the hydraulic shock absorber 10, the damper cylinder 11 is provided with a rod guide 21 through which the piston rod 12 passes. The rod guide 21 is attached to the damper cylinder 11 in a liquid tight manner via an O-ring 22, and makes the piston rod 12 slidable in a liquid tight manner along an inner diameter portion provided with an oil seal 23, a bush 24 and a dust seal 25. In this case, the damper cylinder 11 is provided with a pressure side bumper 26 in an outer side of the rod guide 21, and can control a maximum compressing stroke by bringing the pressure side bumper 26 into contact with a bumper stopper 27 provided in the piston rod 12. Further, the damper cylinder 11 is provided with a washer 28A and an expansion side bump rubber 28 in an inner side of the rod guide 21.

The hydraulic shock absorber 10 is provided with a piston valve apparatus (a compression side and expansion side damping force generating apparatus) 30. The hydraulic shock absorber 10 inhibits an expanding and contracting vibration of the damper cylinder 11 and the piston rod 12 in accordance with an absorption of the impact force by the suspension spring 13, on the basis of the damping force generated by the piston valve apparatus 30.

The piston valve apparatus 30 is structured such that a valve stopper 31, a compression side valve 32, a piston 33, an expansion side valve 34 and a valve stopper 35 are attached to an end portion of the piston rod 12 inserted to the damper cylinder 11, and they are fixed by a nut 36.

The piston 33 is in slidable contact with an inner portion of the damper cylinder 11 via an O-ring 37A and a piston ring 37B provided in an outer peripheral portion in a liquid tight manner, and sections the inner portion of the damper cylinder 11 into a piston side oil chamber 38A in which the piston rod 12 is not received, and a rod side oil chamber 38B in which the piston rod 12 is received The piston 33 is provided with a compression side flow path 39 (not shown) which is provided with the compression side valve 32 and allows the piston side oil chamber 38A and the rod side oil chamber 38B to be communicated with each other, and an expansion side flow path 40 which is provided with the expansion side valve 34 and allows the piston side oil chamber 38A and the rod side oil chamber 38B to be communicated with each other.

Further, the piston valve apparatus 30 has a damping force adjusting apparatus 41 shown in FIGS. 1 and 2.

The damping force adjusting apparatus 41 forms a bypass oil path 42 which can communicate the piston side oil chamber 38A and the rod side oil chamber 38B with the piston rod 12, and is formed by a vertical hole which opens the bypass oil path 42 to the piston side oil chamber 38A and a horizontal hole which opens the bypass oil path 42 to the rod side oil chamber 38B. The damping force adjusting apparatus 41 is provided with a valve sheet in an open end of the vertical hole of the bypass oil path 42, inserts a push rod 43 forming a needle valve 43A facing to a valve seat in a leading end to a hollow portion of the piston rod 12 so as to freely move forward and backward in an axial direction and in a liquid tight manner via an O-ring 44, and can adjust an opening area of the valve seat by the needle valve 43A.

The push rod 43 is structured such that a base end portion 45 is extended to a side of the lower attaching member 17 from the piston rod 12. Further, the push rod 43 is protruded in a direction bringing the base end portion 45 into contact with an adjust rod 46, by a thrust force on the basis of a hydraulic pressure of the piston side oil chamber 38.

The adjust rod 46 is provided in the lower attaching member 17 fixed to an outer end portion of the piston rod 12, is screwed with an installation hole 47 pierced in a direction crossing to an axial direction of the push rod 43 so as to be screwed from an outer portion, is directly brought into contact with the base end portion 45 of the push rod 43 so as to move forward and backward the push rod 43 in an axial direction, adjusts the opening area of the valve seat of the bypass oil passage 42 by the needle valve 43A of the push rod 43, and can adjust an expansion side damping force. The installation hole 47 is formed diagonally such that the opening portion thereof is below the swing arm 19. Accordingly, it is possible to easily access to the adjust rod 46, and it is possible to improve an operability.

Further, the hydraulic shock absorber 10 is provided with a separator 51 which sections a volume compensating chamber 50 with respect to the piston side oil chamber 38A of the damper cylinder 11, as shown in FIG. 2. The separator 51 is held to a protruding portion 52 provided in an inner diameter of the damper cylinder 11. The volume compensating chamber 50 is constituted by an oil storage chamber 50A, and a gas chamber 50B sectioned from the oil storage chamber 50A and a movable partition wall member 54, and an orifice hole 55 communicating the piston side oil chamber 38A with the oil storage chamber 50A is pierced on a center axis of the separator 51. The movable partition wall member 54 is constituted by a free piston, and may be constituted by a diaphragm.

Accordingly, the hydraulic shock absorber 10 carries out a damping operation in the manner mentioned below.

### (Compressing time)

The oil in the piston side oil chamber 38A flows to the rod side oil chamber 38B through the compression side flow path 39, and the oil deflects the compression side valve 32 so as to obtain the compression side damping force. Subsequently, the oil at a volumetric capacity at which the piston rod 12 moves forward to the damper cylinder 11 becomes excessive, and the excessive oil is discharged to the oil storage chamber 50A of the volume compensating chamber 50 from the piston side oil chamber 38A through the orifice hole 55 of the separator 51.

### (Expanding time)

When a relative speed of the damper cylinder 11 and the piston rod 12 is low, the oil in the rod side oil chamber 38B flows to the piston side oil chamber 38A through the bypass flow path 42 of the piston rod 12 which is adjusted in an opening degree by the needle valve 43A of the adjusting rod 43, and the expansion side damping force is obtained on the basis of a throttle resistance generated by the needle valve 43A during the time. Further, when the relative speed of the damper cylinder 11 and the piston rod 12 is middle or high, the oil in the rod side oil chamber 38B flows to the piston side oil chamber 38A through the expansion side flow path 40 while deflecting the expansion side valve 34, and the expansion side damping force is obtained. Further, as this time, the oil comes short at a volume at which the piston rod 12 gets out from the damper cylinder 11, and this short oil is quickly resupplied to the piston side oil chamber 38A from the oil storage chamber 50A of the volume compensating chamber 50 through the orifice hole 55 of the separator 51.

The expanding and contracting vibration of the hydraulic shock absorber 10 can be inhibited on the basis of the damping forces in the compression side and the expansion side.

The hydraulic shock absorber 10 has a spring load adjusting apparatus 60. The spring load adjusting apparatus 60 is constituted by a hydraulic jack 61 adjusting the spring load of the suspension spring 13, and a hydraulic pump 70 supplying and discharging a working fluid to and from the hydraulic jack 61.

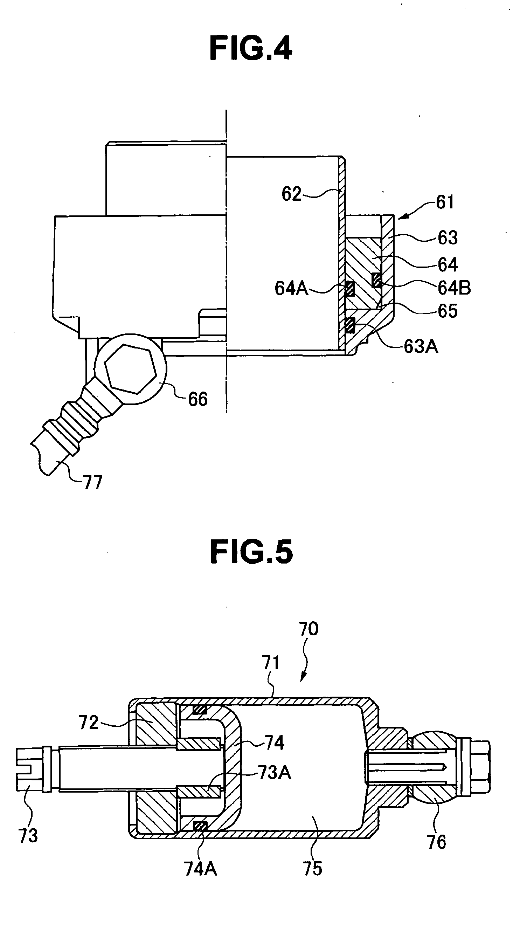

The hydraulic jack 61 is structured, as shown in FIG. 4, such that an outer tube 63 provided with an O-ring 63A is provided in an outer side of an inner tube 62, a plunger 64 is inserted to an annular gap between the inner tube 62 and the outer tube 63, a jack chamber 65 is sectioned and formed in a lower portion of the plunger 64, and the spring receiver 14 mentioned above is supported to an upper portion of the plunger 64. O-rings 64A and 64B are loaded to inner and outer peripheries of the plunger 64.

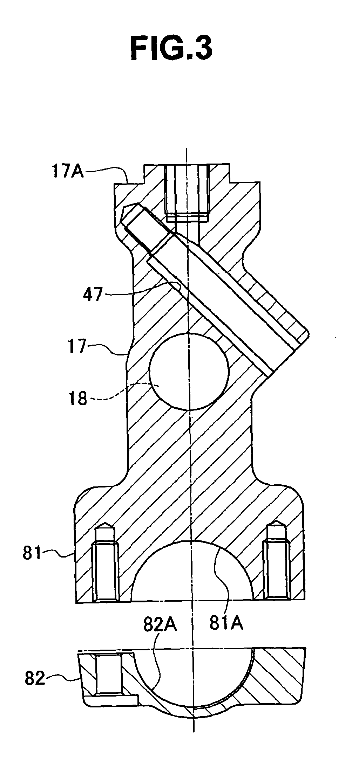

The hydraulic shock absorber 10 is attached to an upper end step portion 17A (FIG. 3) of the lower attaching member 17 fixed to the piston rod 12 in such a manner as to combine stopper plates 66 and 67 which are separated into two half sections, fits a tubular skirt portion 68A provided in a lower end flange of a jack support tube 68 to an outer periphery of the combined stopper plates 66 and 67, fits and locks the inner tube 62 of the hydraulic jack 61 to an outer periphery of the support tube 68, and mounts the outer tube 63 of the hydraulic jack 61 to a lower end flange of the support tube 68.

The hydraulic pump 70 is constituted by a manual pump (in this case, a motor-driven pump may be employed), and is structured, as shown in FIG. 5 such that a cap 72 is fixed to an opening portion of a pump housing 71 by caulking, an operation bolt 73 engaging with the cap 72 is inserted to an inner portion from an outer portion of the pump housing 71, and a pump chamber 75 is sectioned and formed by supporting a plunger 74 to an insertion end of the operation bolt 73. A come-off prevention collar 73A is inserted and attached to an outer periphery of the insertion end of the operation bolt 73, and an O-ring 74A is loaded to an outer periphery of the plunger 74. The spring load adjusting apparatus 60 couples a joint 66 connected to the jack chamber 65 of the hydraulic jack 61, and a joint 76 connected to the pump chamber 75 of the hydraulic pump 70, by a flexible hose 77.

The hydraulic pump 70 supplies and discharges a working fluid in the pump chamber 75 to and from the jack chamber 65 of the hydraulic jack 61 by operating an outer end portion of the operation bolt 73. When lifting up the vehicle height, the spring receiver 14 of the plunger 64 is ascended by supplying the working fluid in the pump chamber 75 to the jack chamber 65 so as to increase the pressure of the jack chamber 65, thereby making an initial set load of the suspension spring 13 large. When descending the vehicle height, the spring receiver 14 is descended by discharging the working fluid in the jack chamber 65 to the pump chamber 75 so as to decrease the pressure of the jack chamber 65, thereby making the initial set load of the suspension spring 13 small.

Accordingly, in the hydraulic shock absorber 10, a holding portion 80 holding the hydraulic pump 70 is provided in a lower portion than the connection portion (the damper bush) 18 with respect to the swing arm 19 in the lower attaching member 17 fixed to the piston rod 12 (the lower portion along the center axis of the damper cylinder 11 of the hydraulic shock absorber 10 and the piston rod 12).

The holding portion 80 in accordance with the present embodiment is constituted by a lower end portion 81 of the lower attaching member 17, and a holder 82 detachably provided in the lower end portion 81 by a bolt 83, as shown in FIG. 3, and holds an entire periphery of an outer periphery of the pump housing 71 structuring the hydraulic pump 70 by a semicircular groove portion 81A extending along a vehicle width direction of the lower end portion 81, and a semicircular groove portion 82A of the holder 82 opposing thereto.

Further, the hydraulic shock absorber 10 is provided with a through hole 19A which can insert the lower attaching member 17 to the swing arm 19, and is provided with bolt attaching portions 19B and 19B pinching the connection portion (the damper bush) 18 of the lower attaching member 17 in both right and left side portions in the vehicle width direction in the lower side of the through hole 19A so as to protrude. Further, the holding portion 80 mentioned above provided in the lower portion than the connection portion (the damper bush) 18 of the lower attaching member 17 inserted to the through hole 19A of the swing arm 19 is arranged in the lower side than the bolt attaching portion 19B of the swing arm 19. The holding portion 80 holds the hydraulic pump 70 in such a manner that the center axis of the hydraulic pump 70 extends along the vehicle width direction, thereby making it possible to operate the operation bolt 73 of the hydraulic pump 70 from an outer side in the vehicle width direction, in the lower space of the swing arm 19.

In this case, in the present embodiment, the hydraulic jack 61 of the spring load adjusting apparatus 60 is arranged in the upper space of the swing arm 19. In this case, a part or an entire of the hydraulic jack 61 of the spring load adjusting apparatus 60 may be arranged in the inner portion of the through hole 19A of the swing arm 19, or may be arranged in the lower space of the swing arm 19.

In accordance with the present embodiment, the following operations and effects can be achieved
(a) The holding portion 80 holding the hydraulic pump 70 is provided in the lower portion than the connection portion 18 with respect to the swing arm 19 in the lower attaching portion 17 of the hydraulic shock absorber 10. Accordingly, even in the case that the space between the vehicle body frame and the swing arm 19 is narrow, it is possible to arrange the hydraulic pump 70 in the space below the swing arm 19, and it is possible to improve a handle operability of the hydraulic pump 70 and an outer appearance.
(b) Since the swing arm 19 is provided with the through hole 19A capable of inserting the lower attaching member 17, it is possible to attach the hydraulic shock absorber 10 in which an entire length is large, that is, an expanding and contracting stroke is long.
(c) Since the holding portion 80 provided in the lower attaching member 17 can hold the outer periphery of the hydraulic pump 70 by the holder 82, it is possible to hole the hydraulic pump 70 by a wide area, and it is possible to avoid the breakage due to the vibration.

## Claims

1. A hydraulic shock absorber of a motor cycle or the like comprising:
a piston rod (12) inserted to a damper cylinder (11);
a suspension spring (13) provided between the damper cylinder (11) and the piston rod (12);
a spring load adjusting apparatus (60) constituted by a hydraulic jack (61) adjusting a spring load of the suspension spring (13), and a hydraulic pump (70) supplying and discharging a working fluid to and from the hydraulic jack (61);
an upper attaching member (16) provided in one of the damper cylinder (11) and the piston rod (12), the upper attaching member (16) being connected to a vehicle frame; and
a lower attaching member (17) provide in the respective other of the damper cylinder (11) and the piston rod (12), the lower attaching member being connected to a swing arm (19),
wherein a holding portion (80) holding the hydraulic pump (30) is provided in a lower portion than a connection portion (18) with respect to the swing arm (19) in the lower attaching member (17).

2. A hydraulic shock absorber of a motor cycle or the like as claimed in claim 1, wherein the swing arm (19) is provided with a through hole (19A) capable of inserting the lower attaching member (17), and the holding portion (80) provided in the lower attaching member (17) is arranged in a lower side of the swing arm (19).

3. A hydraulic shock absorber of a motor cycle or the like as claimed in claim 1 or 2, wherein the holding portion (80) is constituted by a lower end portion (81) of the lower attaching member (17) and a holder (82) detachably provided in the lower end portion (81), and an outer periphery of the hydraulic pump is allowed to be held by the holder (82).

4. A hydraulic shock absorber of a motor cycle or the like as claimed in claim 2, wherein a bolt attaching portion (19B) pinching the connection portion (18) of the lower attaching member (17) is provided in both right and left side portions in a vehicle width direction in a lower side of the through hole (19A) in the swing arm so as to protrude, and the holding portion is arranged in a lower side than the bolt attaching portion (19B) of the swing arm (19).

5. A hydraulic shock absorber of a motor cycle or the like as claimed in any one of claims 1 to 4, wherein the holding portion (80) holds the hydraulic pump (70) in such a manner that a center axis of the hydraulic pump (70) extends along the vehicle width direction.
